(19) Europäisches Patentamt
European Patent Office
Office européen des brevets

(11) Publication number: **0 113 525**
**B1**

(12) # EUROPEAN PATENT SPECIFICATION

(45) Date of publication of patent specification: **07.01.87**

(51) Int. Cl.$^4$: **A 01 N 25/02**

(21) Application number: **83307246.5**

(22) Date of filing: **28.11.83**

(54) **Formulations of synthetic, organic, oil-soluble insecticides having increased effectiveness.**

(30) Priority: **29.11.82 US 445299**

(43) Date of publication of application:
**18.07.84 Bulletin 84/29**

(45) Publication of the grant of the patent:
**07.01.87 Bulletin 87/02**

(84) Designated Contracting States:
**BE DE FR GB IT NL**

(56) References cited:
**EP-A-0 051 195**
**AU-A- 529 748**
**DE-A-1 542 875**
**FR-A-2 081 844**
**GB-A-1 107 226**
**GB-A-1 214 970**
**US-A-2 831 034**
**US-A-4 317 940**

(73) Proprietor: **THE DOW CHEMICAL COMPANY**
**2030 Dow Center Abbott Road P.O. Box 1967**
**Midland, MI 48640 (US)**

(72) Inventor: **Seymour, Keith Goldin**
**6003 Sturgeon Creek Parkway**
**Midland Michigan (US)**
Inventor: **DeVries, Henry Donald**
**1410 Stonewood Place Concord**
**Contra Costa California (US)**
Inventor: **Paroonagian, Doris Lucy**
**1731 Shirley Drive Pleasant Hill**
**Contra Costa California (US)**
Inventor: **Holman, Smallwood, Jr.**
**3616 Sweetbriar Terrace**
**Midland Michigan (US)**
Inventor: **Hatton, Christopher J**
**507 Winston Court Venecia California 94510**
**Solano California (US)**

(74) Representative: **Allard, Susan Joyce et al**
**BOULT, WADE & TENNANT 27 Furnival street**
**London EC4A 1PQ (GB)**

**EP 0 113 525 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention is directed to a method of increasing the effectiveness of chlorpyrifos and chlorpyrifos-methyl and to improved insecticidal compositions containing these insecticides. In particular, the insecticidal activity of ultra low volume (ULV) insecticidal formulations and of low volume emulsion insecticidal formulations is increased.

As an alternative approach to searching for new insecticidal agents, it is highly desirable to provide methods of improving the effectiveness of known insecticides. Improving the activity of known pesticides offers advantages of working with compounds having known physical, insecticidal, and toxicological characteristics. Improving the activity of insecticides results in lesser amounts needed to achieve desired effects, and, in turn, lesser amounts available to contaminate the environment.

Insecticides are commonly applied to foliage as ULV sprays, generally at rates of 0.9 to 18.7 liter/hectare, or as more dilute emulsion sprays generally at rates of 18.7 to 935.4 litre/hectare. Problems associated with spraying insecticides include loss of solvent, i.e., water, xylene, etc., by evaporation which greatly reduces the spray droplet size, causing loss of the active ingredients to spray drift; uneven coverage of treated areas or uneven distribution on the plants; and evaporation of the active insecticidal ingredients themselves, especially highly volatile insecticides. These are particularly annoying problems in certain insecticidal formulations where the sprays are delivered in relatively small droplets, having a diameter as small as about 50 µm, to facilitate spray distribution and penetration of the foliage canopy.

The present invention provides a method of increasing the insecticidal effectiveness of insecticidal formulations containing chlorpyrifos or chlorpyrifos-methyl. Additionally, the present invention provides (a) insecticidal formulations containing chlorpyrifos or chlorpyrifos-methyl having lower volatilities when compared to known formulations resulting in an increased residual activity and (b) insecticidal formulations containing chlorpyrifos or chlorpyrifos-methyl having increased deposition properties, both of these additional effects resulting in the use of lesser amounts of active insecticidal ingredients per hectare.

The present invention relates to a method of increasing the effectiveness of insecticidal formulations by adding at least an equal volumetric amount, based on the volume of the insecticide of a polyoxyalkylene additive to chlorpyrifos or chlorpyrifos-methyl or insecticidal formulations containing chlorpyrifos or chlorpyrifos-methyl whereby the effectiveness of the chlorpyrifos or chlorpyrifos-methyl is increased. The additives are (a) polyoxyalkylene polymer corresponding to the formula:

$$Y[(C_3H_6O)_n(C_2H_4O)_m(C_zH_{2z}O)_tH]_x \qquad \text{Formula (I)}$$

wherein

Y represents the residue, after reaction with an alkylene oxide, of an organic compound having from 2 to 12 carbon atoms;

x represents an integer greater than or equal to three (3);

m represents a number greater than or equal to zero (0) with the proviso that $C_2H_4O$ constitutes no more than 80 percent by weight of the alkylene oxide portion of the molecule;

t and n each independently represent a number greater than or equal to zero (0) with the proviso that the sum of t + n is greater than or equal to eight (8); and

z represents an integer greater than or equal to four (4); (b) polyoxyethyleneoxypropylene glycols, polyoxyethyleneoxybutylene glycols and polyoxyethyleneoxypropyleneoxybutylene glycols having less than 20 percent by weight of the molecule as ethylene oxide and having a molecular weight greater than 1,000 for the propylene oxide, the butylene oxide or propylene oxide/butylene oxide portion of the molecule; and (c) mixtures of (a) and (b) above. The present invention is also directed to insecticidal formulations containing the above polyoxyalkylene additives.

As used herein, the term "insecticidal formulations" refers to any composition containing chlorpyrifos or chlorpyrifos-methyl and a carrier system therefore, and includes concentrates, which are to be diluted before use, such as emulsifiable concentrates, and ready-to-use compositions, such as ULV formulations. Carrier systems include water, organic solvents, such as, xylene, benzene, methylene chloride, isophorone, dimethylformamide, paraffinic hydrocarbons and vegetable oils; and other formulation ingredients, such as, surfactants, stabilizers, antioxidants and emulsifiers.

The amount of additive required to increase the effectiveness of chlorpyrifos or chlorpyrifos-methyl will vary but generally is an amount at least equal to the volume of the chlorpyrifos or chlorpyrifos-methyl present in the insecticidal formulation. It is preferable to add the present additives in amounts in the range of from 1 to 10 times the volumetric amount of chlorpyrifos or chlorpyrifos-methyl present in the insecticidal formulation and even more preferably in the range of from 1 to 5, and most preferably in an amount of at least 2.5 times the volumetric amount of chlorpyrifos or chlorpyrifos-methyl.

The present polyoxyalkylene additives are known compounds and some are commercially available. They are prepared employing procedures well known in the art. Commercially available polyoxyalkylene additives contemplated by the present invention include, for example, POLYGLYCOL® 15—200 which is a glycerine based ethylene oxide-propylene oxide capped polyol having average molecular weight of 2600, POLYGLYCOL® 112—2 which is a triol derived from ethylene and propylene oxides, PLURONIC® L—101

which is a liquid block copolymer of propylene oxide and ethylene oxide having an HLB of 1—0, PLURONIC® L—81 which is a liquid block copolymer of propylene oxide and ethylene oxide having an HLB of 2.0, PLURADOT® which is a liquid polyoxyalkylene glycol, TETRONIC® polyols which are liquid block copolymer of ethylene oxide and propylene oxide, and VORANOL® polyether polyols which are mainly diol and triol primary or secondary hydroxyl containing products having molecular weights of 260 to 6800.

Suitable compositions of Formula (I) above include those compositions wherein Y is the residue, after removal of the active hydrogen atoms, of a polyhydric alcohol, a sugar or an amine and specifically wherein Y is derived from glycerine, pentaerythritol, arabitol, xylitol, sorbitol, erythritol, trimethylolpropane or ethylenediamine. Preferred polyoxyalkylene polymers of Formula I above include those where Y is derived from glycerine, t is zero and the polyoxyethylene content is from 10 to 80 percent by weight of the molecule. The polyoxyalkylene polymers may be random or block copolymers. Either the polyoxypropylene or the polyoxyethylene may be the terminal group. When t, in Formula I above, is an integer greater than zero then z is an integer greater than or equal to 4 and z is usually an integer four (4) to 12.

Preferred polyoxyalkylene additives include the commercially available POLYGLYCOL® 112—2 and POLYGLYCOL® 15—200 polyols and TETRONIC® 702 polyether block-polymer.

The polyoxyethyleneoxypropylene glycols, polyoxyethyleneoxybutylene glycols and polyoxyethyleneoxypropyleneoxybutylene glycols, described above, are all well known compounds and are prepared employing techniques well known in the art. These glycols are commercially available as the PLURONIC® series. Preferred glycols are PLURONIC® L—101 and PLURONIC® L—81 non-ionic block co-polymers.

In the practice of the present invention, the above polyoxyalkylene additives are combined, in the claimed amount, with chlorpyrifos or chlorpyrifos-methyl whereby the effectiveness of the insecticides is increased. The insecticides are then applied to insects or their habitats for insect control. Preferably, the insecticides are applied to valuable plants, i.e., crops, ornamentals, pastures, turf, etc., for the control of undesirable pests. It is especially preferred to apply the present insecticidal formulations to crops. The polyoxyalkylene additives are mixed with insecticides alone, and thereafter applied using well known application techniques, or the additive/insecticide combination is further admixed with known agricultural solvents and known agricultural formulating aids before application. The additives are also mixed with commercially available insecticidal formulations before use.

While it is not critical to the practice of the present invention, the agricultural solvents are advantageously added to obtain a pesticidal formulation with a desirable viscosity to aid in the sprayability of the insecticidal formulations. Usually the polyoxyalkylene additive is a liquid at ambient room temperature but if the additive is a paste or solid then solvents are employed to obtain a formulation with desirable viscosity characteristics compatible for spray formulations. The optimum viscosity for an insecticidal formulation is readily determinable by one skilled in the art and depends on a variety of factors such as, for example, the polyoxyalkylene additive present in the formulation, the solvents present in the formulation, the type of equipment being employed in applying the formulation, and the mode of application, i.e., ULV, emulsion or solution by aerial or ground application. When the composition is applied as a ULV spray, the spray is applied at a rate of 0.9 to 18.7 liter/hectare.

Suitable agricultural solvents are generally water, petroleum solvents, esters, ketones, alcohols, lactones, etc. and include xylene, xylene-range aromatic solvents, methylene chloride, 1,1,1-trichloroethane or combinations of solvents.

Other agricultural formulating aids, such as, antioxidants, emulsifiers or surfactants, are also admixed with the insecticidal formulations of the present invention. For example, emulsifiable concentrates, i.e., formulations that are to be mixed with water and applied as an emulsion, normally contain emulsifiers, such as, the following commercially available products: ATLOX® 3403—F, 3404—F, 3409—F brand emulsifiers, SPONTO® 140T, SPONTO® 300T, TRITON® X—35 and TRITON® X—45. Emulsifiers are used in the present insecticidal formulations that are emulsifiable concentrates to ensure uniform distribution of the concentrates in water at the time of application. The emulsifiers are added in effective quantities and proportions which are readily determinable to one skilled in the art. Similarly, antioxidants, such as 2,6-di-tert-butyl-para-cresol (BHT) and phenothiazine, or other stabilizers are added in effective quantities and proportions which are readily determinable to one skilled in the art.

Chlorpyrifos and chlorpyrifos-methyl are commercially available generally as formulations containing agricultural carriers, solvents and adjuvants. As a practical matter these commercially available formulations are admixed with the hereinbefore defined polyoxyalkylene additives to provide improved insecticidal formulations according to the present invention. For example, chlorpyrifos is commercially available as LORSBAN® 4E insecticide and, when combined with POLYGLYCOL® 112—2 polyol in equal volumetric amounts provides a solution containing about 3 parts by volume additive to 1 part by volume chlorpyrifos (active ingredient) whereby the insecticidal chlorpyrifos and chlorpyrifos-methyl are obtained in substantially pure chemical form, i.e., bulk, technical grade, etc., and formulated by admixing with the present polyoxyalkylene additives and known agricultural solvents and adjuvants.

When applying the present insecticidal formulations to crops, the combination of polyoxyalkylene additive and insecticide should be substantially free of any detrimental, i.e., phytotoxic, effects on the crops. The choice of an acceptable additive as far as phytotoxicity to target crops is concerned is readily determinable by one skilled in the art by employing standard biological phytotoxicity screening tests.

In one embodiment of the present invention, chlorpyrifos or chlorpyrifos-methyl, useful in controlling

pests in a valuable crop, is mixed with a polyoxyalkylene additive, hereinbefore described, wherein the polyoxyalkylene additive is present in an amount that is at least equal to the volumetric amount of the insecticide. The insecticidal formulation is then applied, neat, as a foliar spray to the crop by aircraft or by ground equipment. Alternatively, an emulsifier is added to the formulation and then the formulation is mixed with water and applied to the crop as an emulsion by employing aircraft or ground equipment. When applying the present formulations as oil-in-water emulsions, they are generally applied as low volume sprays at a rate of 93.54 liters of spray per hectare or less. At greater spray volumes the increased effectiveness of the herein described insecticides is less dramatic. Also, the formulation is mixed with oil and applied employing known techniques.

In another embodiment of the present invention, the herein-described polyoxyalkylene additives, in combination with an emulsifying agent, are provided as emulsifiable tank mix additives which are to be separately added to the water carrier in the field tanks prior to application of the insecticidal formulations to crops.

In a preferred embodiment of the present invention, chlorpyrifos or chlorpyrifos-methyl are mixed with a polyoxyalkylene polymer of Formula I which is a block copolymer wherein Y is derived from glycerine ($x = 3$; $t = 0$) and the polymer has an average molecular weight of about 4,700 and a ratio of polyoxypropylene/polyoxyethylene of about 4:1 respectively wherein the polyoxyethylene is the terminal group, commercially available as POLYGLYCOL® 112—2 polyol, or a polyoxyalkylene polymer of Formula I which is a random polymer wherein Y is derived from glycerine ($x = 3$; $t = 0$) and the polymer has an average molecular weight of about 2,600 and equal proportions of polyoxypropylene and polyoxyethylene, commercially available as POLYGLYCOL® 15—200 polyol, wherein the polyol is present in an amount that is at least equal to the volumetric amount of insecticide. The pesticidal formulation is then applied, neat, as an ULV foliar spray to the crop by aircraft or by ground equipment. Alternatively, an emulsifier is added to the formulation and then the formulation is mixed with water and applied to the crop as an emulsion at rates usually less than 93.54 liters spray per hectare, by employing aircraft or ground equipment.

In an especially preferred embodiment of the present invention POLYGLYCOL® 112—2 polyol is combined with chlorpyrifos wherein the polyol is present in a volumetric amount at least equal to the volume of chlorpyrifos. This formulation is then sprayed on a cotton crop by aircraft or ground equipment to provide up to 1.12 kg of chlorpyrifos per hectare of cotton crop. This formulation may be sprayed as an ULV spray, optionally containing a solvent such as, methylene chloride, or as an oil-in-water emulsion by adding an emulsifying agent to the formulation and then adding it to water.

In another preferred embodiment of the present invention, PLURONIC® L—101 or L—81 block copolymer is combined with chlorpyrifos wherein the block copolymer is present in an amount at least equal to the volume of chlorpyrifos. This formulation is then sprayed on valuable crops by aircraft or ground equipment to provide up to 1.12 kg of chlorpyrifos per hectare of crop. This formulation may be sprayed as an ULV spray, optionally containing a solvent such as, methylene chloride, or as an oil-in-water emulsion by adding an emulsifying agent to the formulation and then adding it to water.

In a further preferred embodiment of the present invention, a polyoxyalkylene polymer of Formula I which is a block copolymer wherein Y is derived from ethylenediamine ($x = 4$; $t = 0$) and the polymer has an average molecular weight of about 4,000 and a ratio of polyoxypropylene/polyoxyethylene of about 4:1 respectively wherein the polyoxyethylene is the terminal group, commercially available as TETRONIC® 702 polyether block polymer, is combined with chlorpyrifos wherein the block copolymer is present in an amount at least equal to the volume of chlorpyrifos. This formulation is then sprayed on valuable crops by aircraft or ground equipment to provide up to 1.12 kg of chlorpyrifos per hectare of crop. This formulation may be sprayed as an ULV spray, optionally containing a solvent such as methylene chloride, or as an oil-in-water emulsion by adding an emulsifying agent to the formulation and then adding it to water.

The following examples further illustrate the present invention.

Example 1

The following materials are combined to form an ULV formulation:

| | |
|---|---|
| chlorpyrifos | 0.06—0.48 kg/liter |
| polyoxyalkylene additive | 0.06—0.85 liter/liter |
| solvent (xylene) xylenerangearomaticsolvent(methylenechloride, trichloroethane) | 0—0.85 liter/liter |
| diluent (petroleum oil) | 0—0.75 liter/liter |
| emulsifier | 0—0.4 gal/gal liter/liter |

The volume ratio of polyoxyalkylene additive to chlorpyrifos is in the range of from 1:1 to 12:1. Chlorpyrifos density is taken as 1.428 g/ml for calculations used in this specification.

Example 2

The following ingredients were admixed to form the following formulations of chlorpyrifos:

Formulation A:

| Ingredients | Weight Percent |
|---|---|
| Chlorpyrifos | 22.9 |
| Xylene | 18.7 |
| BHT | 0.1 |
| Polyglycol® 112—2 polyol | 52.9 |
| Emulsifier (ATLOX® 3403F, 3404F, 3409F in a 10—75—15 weight ratio respectively) | 5.4 |
| | 100 |

Formulation B:

| Ingredients | Weight Percent |
|---|---|
| Chlorpyrifos | 22.9 |
| Xylene | 18.7 |
| BHT | 0.1 |
| Polyglycol® 15—200 polyol | 52.9 |
| Emulsifier (as in Formulation A above) | 5.4 |
| | 100 |

Formulation C:

| Ingredients | Weight Percent |
|---|---|
| Chlorpyrifos | 22.9 |
| Xylene | 18.7 |
| BHT | 0.1 |
| Tetronic® 702 polyether block-polymer | 52.9 |
| Emulsifier (as in Formulation A above) | 5.4 |
| | 100 |

Formulation D:

| Ingredients | Weight Percent |
|---|---|
| Chlorpyrifos | 22.9 |
| Xylene | 18.7 |
| BHT | 0.1 |
| Tetronic® 70R4 polyether block-polymer | 52.9 |
| Emulsifier (as in Formulation A above) | 5.4 |
| | 100 |

Control Formulation:

LORSBAN® 4E insecticide (0.48 kg chlorpyrifos/liter)

Formulations A, B, C, and D above may be applied neat as an ULV spray or may be mixed with water and applied as an oil-in-water emulsion spray. In each of Formulations A, B, C and D above the v/v ratio of polyoxyalkylene additive to chlorpyrifos is about 3:1.

Example 3

The formulations of Example 2 were used to form an oil-in-water emulsion by mixing the appropriate amount of formulation with enough water to apply 0.56 kg chlorpyrifos/hectare in a spray volume of 23.39 liter/hectare. The emulsions were sprayed on greenhouse-grown cotton plants which after application were maintained in a growth chamber at a temperature of 33°C. Tobacco budworm (*Heliothis virescens*) control was evaluated by excising treated leaves at various time intervals post-treatment, placing the leaves into petri dishes (at 35°C) and infesting them with 5 second instar larvae. Percent control was determined at 48 hours post-infestation and is listed in Table 2 under "TBW control". Two-spotted spider mite, (*Tetranychus urticae*), control was evaluated by infesting treated plants in temperature controlled chambers at 35°C with 10 adult mites per plant at various time intervals post-treatment. Percent control was determined at 48 hours post-infestation and are listed in Table 2 under "2—SSM control".

TABLE 1

| TBW Control Formulation | 2—SSM Control (Percent) | | | | (Percent) | | |
|---|---|---|---|---|---|---|---|
| | Day 1 | Day 2 | Day 3 | Day 0 | Day 1 | Day 2 | Day 3 |
| A | 100 | 80 | 40 | 89 | 100 | 81 | 67 |
| B | 100 | 94 | 43 | 96 | 87 | 78 | 53 |
| C | 100 | 83 | 31 | 93 | 100 | 65 | 29 |
| D | 100 | 89 | 37 | 87 | 89 | 89 | 53 |
| Control | 100 | 60 | 23 | 91 | 64 | 30 | 29 |

Example 4

The formulations of Example 2 were used to form an oil-in-water emulsion by mixing the appropriate amount of formulation with enough water to apply 0.56 kg chlorpyrifos/hectare in a spray volume of 23.39 liter/hectare. The emulsions were sprayed on greenhouse-grown rice plants that were 10—15 cms in height. Aster leafhopper (*Macrosteles fascifrons*) control was evaluated by placing the treated rice plants within a LUCITE® resin cylinder and infesting the plants with approximately ten adult leafhoppers 24 hours post-treatment. The cylinders were sealed with vented lids. Mortality readings were made 24 hours post-infestation. The plants were re-infested within clean cylinders at 4, 6, 7 and 8 days post-treatment with the formulations. Results are listed in Table 2.

TABLE 2

| Formulation | Percent control of Aster Leafhopper (days post-treatment) | | | | |
|---|---|---|---|---|---|
| | Day 1 | Day 4 | Day 6 | Day 7 | Day 8 |
| A | 100 | 100 | 98 | 96 | 90 |
| B | 100 | 100 | 64 | 71 | 37 |
| C | 100 | 100 | 90 | 87 | 81 |
| D | 100 | 100 | 63 | 49 | 40 |
| Control | 100 | 100 | 53 | 49 | 40 |

Example 5

A field trial was conducted to determine the effectiveness of various pesticidal formulations when applied as aqueous emulsion sprays to cotton crops. The cotton plants were trimmed and infested with

second and third instar tobacco budworm larvae. Treatments were applied to the cotton as an oil-in-water emulsion by mixing the formulations described in Table 3 below with enough water to apply either 0.56 or 1.12 kg of chlorpyrifos per hectare at a spray volume of 23.39 liter/hectare.

Four plants from each plot were examined 48 hours post-treatment for the number of live and dead larvae. These results are listed in Table 3 under "Field Control" (percent). At 24 and 48 hours post-treatment, leaves were picked from each plot and were placed in individual petri dishes and infested with late second instar tobacco budworm larvae. Mortality readings were taken 48 hours post-infestation. The results are listed in Table 3 under "Residual Control" (percent). Formulations 3 and 4 were prepared by mixing the appropriate POLYGLYCOL® polyol with the LORSBAN® 4E insecticide and thereafter adding this mixture to water with agitation.

TABLE 3

| Formulation | Chlorpyrifos (kg/hectare) | Field Control (percent) | Residual Control (percent) | |
|---|---|---|---|---|
| | | | 24 hrs | 48 hrs |
| 1. Lorsban® 4E Insecticide | 0.56 | 55 | 30 | 27 |
| 2. Lorsban® 4E Insecticide | 1.12 | 48 | 33 | 40 |
| 3. Equal Parts by Volume of Lorsban® 4E insecticide and POLYGLYCOL® 112—2 polyol | 0.56 | 92 | 90 | 36 |
| 4. Equal Parts by Volume of LORSBAN® 4E insecticide and POLYGLYCOL® 15—200 polyol | 0.56 | 64 | 86 | 40 |

Example 6

The following ingredients were admixed to prepare formulations of the present invention:

Formulation E:

| | |
|---|---|
| LORSBAN® 4E insecticide | 2 ml |
| PLURACOL® TP2540 additive | 6 ml |
| water | qs 40 ml |

PLURACOL® TP2540 is a polyoxypropylene derivative of trimethylolpropane having an average molecular weight of about 2,640.

Formulation F:

| | |
|---|---|
| LORSBAN® 4E insecticide | 2 ml |
| PLURACOL® PEP 550 | 6 ml |
| water | qs 40 ml |

PLURACOL® PEP 550 is a polypropylene derivative of pentaerythritol having an average molecular weight of about 500.

These formulations were then sprayed on greenhouse grown cotton plants at a rate equivalent to 0.28 kg chlorpyrifos/hectare (23.39 liters of spray/hectare) in substantially the same manner as set forth in Example 3. Results for the control of TBW and 2—SSM are listed in TABLE 4 compared to a control (LORSBAN® 4E + water) and an untreated check. Percent control was determined 48 hours post-infestation.

TABLE 4

| Formulation | TBW Control (Percent) | | | | 2—SSM Control (Percent) | | | |
|---|---|---|---|---|---|---|---|---|
| | Day 0 | Day 1 | Day 2 | Day 3 | Day 0 | Day 1 | Day 2 | Day 3 |
| E | 100 | 100 | 80 | 71 | 98 | 90 | 80 | 51 |
| F | 100 | 100 | 6 | 51 | 94 | 78 | 49 | 47 |
| Control | 100 | 68 | 37 | 57 | 92 | 56 | 39 | 24 |
| Untreated check | 7 | 0 | 0 | 0 | 0 | 0 | 0 | 0 |

In further embodiments, the improved insecticidal formulations of the present invention may contain additional agricultural chemicals to increase the spectrum of activity. Such additional agricultural chemicals may be water-soluble insecticides, nematocides, arthropodicides, herbicides, fertilizers, micronutrients, fungicides or bactericides that are compatible with the formulations of the present invention and not antagonistic to the insecticidal activity of the present formulations. The agricultural chemicals in combination can generally be present in the ratio of from 1 to 100 parts of the insecticides of the present invention with from 100 to 1 parts of the additional agricultural chemicals.

**Claims**

1. A composition of a synthetic, organic, oil-soluble, water-insoluble insecticide which is chlorpyrifos or chlorpyrifos-methyl, and which contains at least an equal volumetric amount, based on the volume of the insecticide of one of:

(a) a polyoxyalkylene polymer corresponding to the formula

$$Y[(C_3H_6O)_n(C_2H_4O)_m(C_zH_{2z}O)_tH]_x$$

wherein

Y represents the residue, after reaction with an alkyleneoxide, of an organic compound having from 2 to 12 carbon atoms;

x represents an integer greater than or equal to three (3);

m represents a number greater than or equal to zero (0) with the proviso that $C_2H_4O$ constitutes no more than 80 percent by weight of the alkyleneoxide portion of the molecule; and

t and n each independently represent a number greater than or equal to zero (0) with the proviso that the sum of t + n is greater than or equal to eight (8); and

z represents an integer greater than or equal to four (4);

(b) polyoxyethyleneoxypropylene glycols, polyoxyethyleneoxybutylene glycols and polyoxyethyleneoxypropyleneoxybutylene glycols having less than 20 percent by weight of the molecule as ethylene oxide and having a molecular weight greater than 1,000 for the propylene oxide, the butylene oxide or propylene oxide/butylene oxide portion of the molecule; or

(c) mixtures of (a) and (b).

2. A composition as claimed in claim 1 wherein the additive is a polyoxyalkylene polymer of (a) wherein Y represents the residue of a polyhydric alcohol, a sugar or an amine and t is zero (0).

3. A composition as claimed in claim 2 wherein Y is derived from glycerine, pentaerythritol, arabitol, xylitol, sorbitol, erythritol, trimethylol propane or ethylenediamine.

4. A composition as claimed in claim 3 wherein Y is derived from glycerine and the polyoxyalkylene polymer is a block copolymer having an average molecular weight of about 4,700 and a ratio of polyoxypropylene/polyoxyethylene of about 4:1 respectively wherein the polyoxyethylene is the terminal group.

5. A composition as claimed in claim 3 wherein Y is derived from ethylenediamine and the polyoxyalkylene polymer is a block copolymer having an average molecular weight of about 4,000 and a ratio of polyoxypropylene/polyoxyethylene of about 4:1 respectively wherein the polyoxyethylene is the terminal group.

6. A composition as claimed in any one of the preceding claims wherein the polyoxyalkylene polymer is present in an amount of at least 2.5 times the volumetric amount of chlorpyrifos or chlorpyrifos-methyl.

7. An insecticidal formulation which contains a composition as claimed in any one of claims 1 to 6 and a carrier system therefor.

8. A method of controlling insects which comprises applying an insecticidally effective amount of the composition as claimed in any one of claims 1 to 7 to an insect or its environment.

9. A method as claimed in claim 8 wherein the composition is applied as an ULV spray.

10. A method as claimed in claim 9 wherein the spray is applied at a rate of 0.9 to 18.7 liter/hectare.

**Patentansprüche**

1. Zusammensetzung eines synthetischen, organischen, öllöslichen, wasserunlöslichen Insektizids, das Chlorpyrifos oder Chlorpyrifos-methyl ist, und die mindestens eine gleiche volumetrische Menge, bezogen auf das Volumen des Insektizids, eines der Bestandteile enthält:

(a) ein Polyoxyalkylenpolymeres der Formel

$$Y[(C_3H_6O)_n(C_2H_4O)_m(C_zH_{2z}O)_tH]_x$$

worin

Y den Rest, nach Reaktion mit einem Alkylenoxid, einer organischen Verbindung mit 2 bis 12 Kohlenstoffatomen darstellt;

x eine ganze Zahl größer oder gleich Drei (3) ist;

m eine Zahl größer oder gleich Null (0) darstellt, mit der Maßgabe, daß $C_2H_4O$ nicht mehr als 80 Gew.-% des Alkylenoxidanteils des Moleküls bildet; und

t und n unabhängig voneinander eine Zahl größer oder gleich Null (0) bedeuten, mit der Maßgabe, daß die Summe von t + n größer oder gleich Acht (8) ist; und

z eine ganze Zahl größer oder gleich Vier (4) darstellt;

(b) Polyoxyäthylenoxypropylenglykole, Polyoxyäthylenoxybutylenglykole und Polyoxyäthylenoxypropylenoxybutylenglykole mit weniger als 20 Gew.-% des Moleküls als Äthylenoxid, und mit einem Molekulargewicht größer als 1000 für den Anteil des Moleküls an Propylenoxid, Butylenoxid oder Propylenoxid/Butylenoxid; oder

(c) Mischungen von (a) und (b).

2. Zusammensetzung nach Anspruch 1, dadurch gekennzeichnet, daß das Additiv ein Polyoxyalkylenpolymer von (a) ist, worin Y den Rest eines mehrwertigen Alkohols, eines Zuckers oder eines Amins darstellt und t Null (0) ist.

3. Zusammensetzung nach Anspruch 2, dadurch gekennzeichnet, daß Y abgeleitet ist von Glycerin, Pentaerythrit, Arabit, Xylit, Sorbit, Erythrit, Trimethylolpropan oder Äthylendiamin.

4. Zusammensetzung nach Anspruch 3, dadurch gekennzeichnet, daß Y abgeleitet ist von Glycerin und das Polyoxyalkylenpolymer ein Blockcopolymer ist mit einem mittleren Molekulargewicht von ca. 4700 und einem Verhältnis von Polyoxypropylen/Polyoxyäthylen von ca. 4:1, und worin das Polyoxyäthylen die Endgruppe ist.

5. Zusammensetzung nach Anspruch 3, dadurch gekennzeichnet, daß Y abgeleitet ist von Äthylendiamin und das Polyoxyalkylenpolymer ein Blockcopolymeres ist mit einem mittleren Molekulargewicht von ca. 4000 und einem Verhältnis von Polyoxypropylen/Polyoxyäthylen von ca. 4:1, und worin das Polyoxyäthylen die Endgruppe ist.

6. Zusammensetzung nach einem der vorhergehenden Ansprüche, dadurch gekennzeichnet, daß das Polyoxyalkylenpolymere in einer Menge von mindestens dem 2,5-fachen der volumetrischen Menge an Chlorpyrifos oder Chlorpyrifos-methyl vorhanden ist.

7. Insektizide Formulierung, die eine in einem der Ansprüche 1 bis 6 beanspruchte Zusammensetzung und ein Trägersystem dafür enthält.

8. Verfahren zur Kontrolle von Insekten, dadurch gekennzeichnet, daß man eine insektizid wirksame Menge der in einem der Ansprüche 1 bis 7 beanspruchten Zusammensetzung auf ein Insekt oder seine Umgebung appliziert.

9. Verfahren nach Anspruch 8, dadurch gekennzeichnet, daß die Zusammensetzung als ULV-Spray appliziert wird.

10. Verfahren nach Anspruch 9, dadurch gekennzeichnet, daß das Spray in einer Menge von 0,9 bis 18,7 l/Ha appliziert wird.

**Revendications**

1. Composition d'un insecticide synthétique, organique, soluble dans une huile, insoluble dans l'eau, qui est le chlorpyrifos ou le chlorpyrifos-méthyl, et qui contient, en un volume au moins égal à celui de l'insecticide,

(a) soit un polymère polyoxyalkylène correspondant à la formule

$$Y((C_3H_6O)_n(C_2H_4O)_m(C_zH_{2z}O)_tH)_x$$

dans laquelle

Y représente le résidu, après réaction sur un oxyde d'alkylène, d'un composé organique ayant de 2 à 12 atomes de carbone;

x représente un entier supérieur ou égal à trois (3);

m représente un nombre supérieur ou égal à zéro (0), à la condition que $C_2H_4O$ ne compte pas pour plus de 80% en poids de la partie oxyde d'alkylène de la molécule; et

t et n, indépendamment l'un de l'autre, représentent chacun un nombre supérieur ou égal à zéro (0), à la condition que la somme t + n soit supérieure ou égale à huit (8); et

z représente un entier supérieur ou égal à quatre (4);

(b) soit des polyoxyéthylène-oxypropylène-glycols, des polyoxyéthylène-oxybutylène-glycols et des polyoxyéthylène-oxypropylène-oxybutylène-glycols dont moins de 20% en poids de la molécule sont constitués d'oxyde d'éthylène, et ayant une masse moléculaire supérieure à 1000 pour la partie oxyde de propylène, la partie oxyde de butylène ou la partie oxyde de propylène/oxyde de butylène de la molécule;

(c) soit des mélanges de (a) et de (b).

2. Composition selon la revendication 1, dans laquelle l'additif est un polymère polyoxyalkylène de (a), où Y représente le résidu d'un polyalcool, d'un sucre ou d'une amine, et t vaut zéro (0).

3. Composition selon la revendication 2, dans laquelle Y dérive du glycérol, du pentaérythritol, de l'arabitol, du xylitol, du sorbitol, de l'érythritol, du triméthylolpropane ou de l'éthylènediamine.

4. Composition selon la revendication 3, dans laquelle Y dérive du glycérol, et le polymère polyoxyalkylène est un copolymère séquencé ayant une masse moléculaire moyenne d'environ 4700 et un rapport polyoxypropylène/polyoxyéthylène respectivement d'environ 4:1, le polyoxyéthylène étant le groupe terminal.

5. Composition selon la revendication 3, dans laquelle Y dérive de l'éthylènediamine et le polymère polyoxyalkylène est un copolymère séquencé ayant une masse moléculaire moyenne d'environ 4000 et un rapport polyoxypropylène/polyoxyéthylène respectivement d'environ 4:1, le polyoxyéthylène étant le groupe terminal.

6. Composition selon l'une quelconque des revendications précédentes, dans laquelle le polymère polyoxyalkylène est présent en un volume au moins 2,5 fois égal à celui du chlorpyrifos ou du chlorpyrifos-méthyl.

7. Formulation insecticide qui contient une composition selon l'une quelconque des revendications 1 à 6 et un système support pour cette dernière.

8. Procédé de maîtrise des insectes, qui consiste à appliquer une quantité à effet insecticide de la composition selon l'une quelconque des revendications 1 à 7 sur un insecte ou son environnement.

9. Procédé selon la revendication 8, dans lequel la composition est appliquée sous la forme d'une bouillie pour pulvérisation à très faible volume.

10. Procédé selon la revendication 9, caractérisé en ce que la bouillie pour pulvérisation est appliquée à une dose de 0,9 à 18,7 litres/hectare.